# EUROPEAN PATENT SPECIFICATION

(11) **EP 4 398 198 B1**
(45) Date of publication and mention of the grant of the patent: **26.08.2026**
(21) Application number: 24150105.5
(22) Date of filing: 02.01.2024
(51) Int. Cl.: G06V 10/141, G06V 10/143, G06V 10/58, G06V 20/68

(54) **MOBILE CAMERA SYSTEM TO AUTONOMOUSLY OBTAIN AND PROCESS IMAGES TO PREDICT GRAPE QUALITY**
MOBILES KAMERASYSTEM ZUR AUTONOMEN GEWINNUNG UND VERARBEITUNG VON BILDERN ZUR VORHERSAGE DER WEINTRAUBENQUALITÄT
SYSTÈME DE CAMÉRA MOBILE POUR OBTENIR ET TRAITER DES IMAGES DE MANIÈRE AUTONOME POUR PRÉDIRE LA QUALITÉ DE RAISIN

(30) Priority: 05.01.2023 US 202318093528
(43) Date of publication of application: 10.07.2024
(73) Proprietor: KUBOTA CORPORATION, Osaka-shi, Osaka 530-0011 (JP)
(72) Inventor: KADIYALA, Srikanth, Sakai-shi, Osaka 590-0823 (JP); WAN, Shan, Sakai-shi, Osaka 590-0823 (JP); BHARATHWAJ, Sai, Sakai-shi, Osaka 590-0823 (JP); MUNEHISA, Mitani, Sakai-shi, Osaka 590-0823 (JP); SURYA, Nagarjun Pogakula, Sakai-shi, Osaka 590-0823 (JP); NG, Fuk Ho Pius, Sakai-shi, Osaka 590-0823 (JP)
(74) Representative: Cabinet Beau de Loménie

(56) References cited:
- CN-A- 109 297 909
- KR-A- 20210 143 627
- US-A1- 2021 158 041
- FERNÁNDEZ-NOVALES JUAN ET AL: "Non-Invasive Monitoring of Berry Ripening Using On-the-Go Hyperspectral Imaging in the Vineyard", AGRONOMY, vol. 11, no. 12, 13 December 2021 (2021-12-13), pages 2534, XP093150429, ISSN: 2073-4395, DOI: 10.3390/agronomy11122534

## Description

### BACKGROUND OF THE INVENTION

### 1. Field of the Invention

The present invention relates to a camera system and to image processing. More specifically, the present invention relates to a mobile camera system that is able to obtain and process images in order to predict grape quality.

### 2. Description of the Related Art

Cartesian coordinate systems, including cartesian coordinate robots, have been used in industrial applications for milling, printing, and the like. A cartesian coordinate system includes three principal axes of control that are linear and arranged at right angles to one another, and each principal axis can include a separate drive mechanism. According to the rigid structure and straight-line movement in cartesian coordinate systems, payloads can be precisely and reliably moved, even under heavy load. However, cartesian coordinate systems have generally not been applied to move and locate devices such as cameras and light sources.

Known systems for determining characteristics of food products such as vegetables, fruit, and other produce, include using a camera to capture an image of a food product and then analyzing the image to determine desired characteristic(s) of the food product. U.S. Patent No. 10,408,748; U.S. Patent No. 8,014,569; U.S. Patent Application Publication No. 2021/0311011; U.S. Patent No. 10,885,675; and U.S. Patent No. 9,922,261 disclose such known systems, but do not implement any analysis of hyperspectral images of food products.

Spanish Patent No. 2795499 discloses a method of determining a group of fruit characteristics that includes capturing a hyperspectral image of at least a part of a fruit-bearing plant. However, Spanish Patent No. 2795499 only captures the hyperspectral image using natural light, which can cause errors when processing and analyzing the image due to natural light having variable spectra and due to the hyperspectral image including light spectra that are not relevant to the fruit-bearing plant being imaged. Furthermore, Spanish Patent No. 2795499 does not disclose that any other images of a fruit-bearing plant are obtained, such that it may be difficult to isolate a desired portion of the fruit-bearing plant, in order to enable a user to verify the data determined from the hyperspectral image, and to perform additional processing based on an artificial intelligence (Al) model.

Fernández-Novales et al. ("Non-Invasive Monitoring of Berry Ripening Using On-the-Go Hyperspectral Imaging in the Vineyard", Agronomy 2021, no. 12: 2534) discloses a process of hyperspectral imaging to measure grape composition that includes capturing hyperspectral images by a hyperspectral camera mounted to a vehicle. However, Fernández-Novales et al. only demonstrates capturing hyperspectral images during daytime by environmental light, which can cause errors when processing and analyzing the image due to daylight having variable spectra and due to the hyperspectral image including light spectra that are not relevant to the fruit-bearing plant being imaged. Furthermore, Fernández-Novales et al. does not disclose that any other images of a fruit-bearing plant are obtained, such that it may be difficult to isolate a desired portion of the fruit-bearing plant, for a user to verify the data determined from the hyperspectral image, and to perform additional processing based on an Al model.

### SUMMARY OF THE INVENTION

The invention is defined in the appended claims.

A method according to a preferred embodiment of the present invention is provided according to claim 1.

The first image data can include color data and depth data. The first image data can include color data and depth data, the object can be detected based on the color data alone, and the location of the object can be determined based on a combination of the color data and the depth data.

The method can further include turning on a light source to illuminate the object while acquiring the first image data. The light source can be an LED light source. The light source can be turned off prior to acquiring the second image data.

The hyperspectral camera can be moved based on the determined location of the object. The hyperspectral camera can be moved by a cartesian arm.

The hyperspectral camera can be only moved along a single linear axis.

The method can further include turning on a light source to illuminate the object while acquiring the second image data. The light source can emit a predetermined spectrum of light. The predetermined spectrum of light can be a range of about 400 nm to about 1000 nm.

A halogen light source can surround the hyperspectral camera or can be located at only one side of the hyperspectral camera. The hyperspectral camera can have a fixed focus length.

The location of the object can be determined in three dimensions.

The above and other features, elements, steps, configurations, characteristics, and advantages of the present invention will become more apparent from the following detailed description of preferred embodiments of the present invention with reference to the attached drawings.

### BRIEF DESCRIPTION OF THE DRAWINGS

Fig. 1 shows a front perspective view of a cartesian arm system according to a preferred embodiment of the present invention.
Fig. 2 shows a rear perspective view of the cartesian arm system shown in Fig. 1.
Fig. 3 shows a close-up view of a portion of the cartesian arm system shown in Fig. 1.
Fig. 4A-4C are a flowcharts showing processes performed by a vehicle or the cartesian arm system according to preferred embodiments of the present invention.
Fig. 5 is a flowchart showing an image processing process performed according to a preferred embodiment of the present invention.
Fig. 6 shows sub-operations that are performed in a grape filtering operation of Fig. 5.
Figs. 7A and 7B show an example of a block diagram of a cloud system that includes a vehicle platform, a cloud platform, and a user platform according to a preferred embodiment of the present invention.
Fig. 8 is a flowchart showing a process of constructing a calibration curve to train an Al model according to a preferred embodiment of the present invention.

### DETAILED DESCRIPTION OF PREFERRED EMBODIMENTS

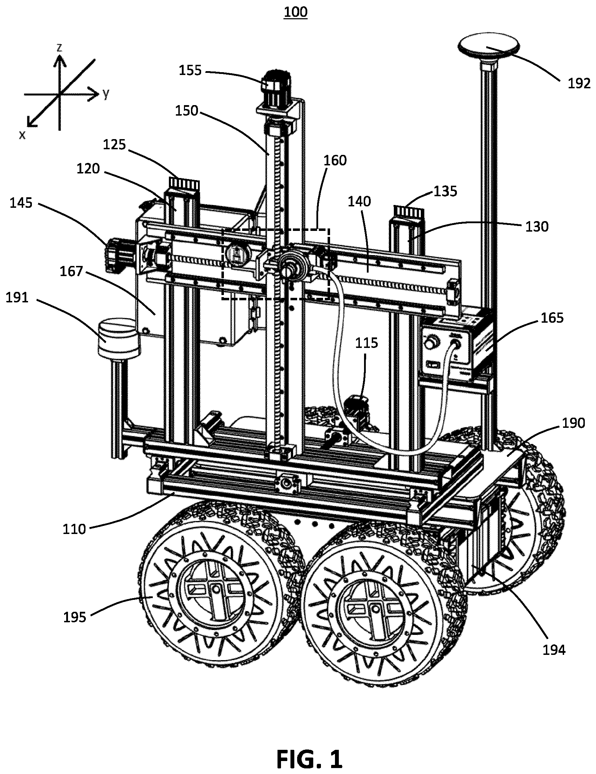

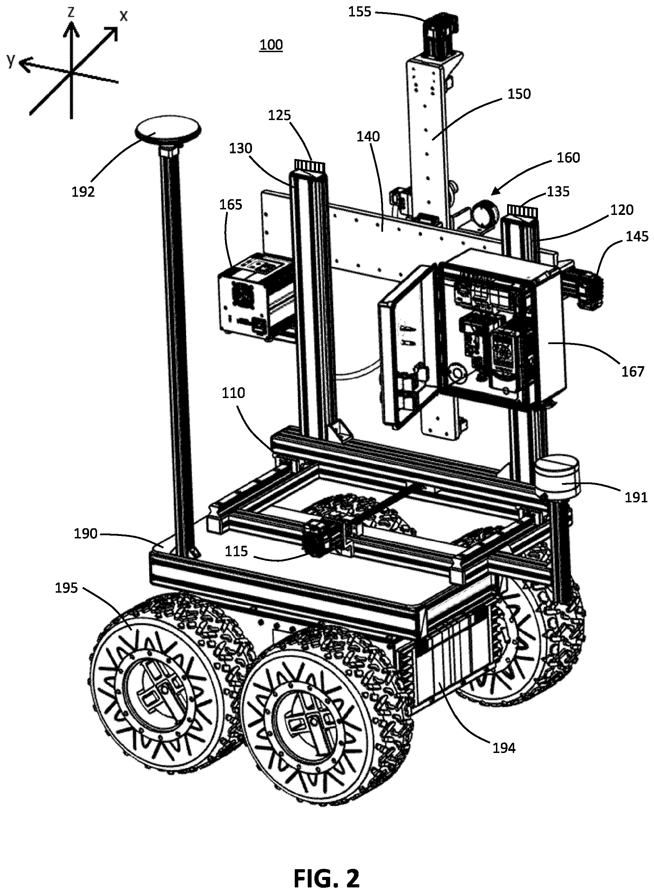

Fig. 1 shows a front perspective view of a cartesian arm system 100 according to a preferred embodiment of the present invention. As shown in Fig. 1, the cartesian arm system 100 can include a vehicle or the like. However, the cartesian arm system 100 can be mounted on a cart that is able to be towed by a vehicle or a person. Fig. 2 shows a rear perspective view of the cartesian arm system 100 of Fig. 1.

As shown in Figs. 1 and 2, the cartesian arm system 100 includes a base frame 110, side frames 120 and 130, a horizontal frame 140, and a vertical frame 150. The side frames 120 and 130 are mounted to the base frame 110, and the side frames 120 and 130 directly support the horizontal frame 140. The vertical frame 150 is mounted on the horizontal frame 140. One or more devices 160, such as one or more cameras and/or light sources, can be mounted on the vertical frame 150. The cartesian arm system 100 is preferably able to support a payload of about 5 kg, for example.

The base frame 110 includes a base frame motor 115 that is able to move the side frames 120 and 130 along the base frame 110, such that the one or more devices 160 can be moved in a first direction (the x-axis shown in Fig. 1). The horizontal frame 140 includes a horizontal frame motor 145 that is able to move the vertical frame 150 along the horizontal frame 140, such that the one or more devices 160 can be moved in a second direction (the y-axis shown in Fig. 1). The vertical frame 150 includes a vertical frame motor 155 that is able to move the one or more devices 160 along the vertical frame 150 in a third direction (the z-axis shown in Fig. 1). Each of the base frame motor 115, the horizontal frame motor 145, and the vertical frame motor 155 can be a screw motor, for example. Screw motors can provide a relatively high level of precision to accurately move and locate the one or more devices 160. However, each of the base frame motor 115, the horizontal frame motor 145, and the vertical frame motor 155 can be any motor that provides a continuous torque greater than or equal to about 0.2 N m, and preferably any motor that provides a continuous torque greater than or equal to about 0.3 N m.

Each of the base frame motor 115, the horizontal frame motor 145, and the vertical frame motor 155 can be designed and/or sized according to an overall weight of the one or more devices 160. In addition, a coupler for each of the base frame motor 115, the horizontal frame motor 145, and the vertical frame motor 155 can be changed according to a motor shaft diameter and/or a corresponding mounting hole pattern.

The base frame 110 can be mounted on a base plate 190, and base electronics 194 can also be mounted to the base plate 190. A plurality of wheels 195 can be mounted to the base plate 190 or the base electronics 194. The plurality of wheels 195 can be controlled by the base electronics 194, and the base electronics 194 can include a power supply to drive an electric motor or the like. As an example, the plurality of wheels 195 can be driven by an electric motor with a target capacity of about 65 kW to about 75 kW and a power supply for the electric motor can be a battery with a capacity of about 100 kWh.

The base electronics 194 can also include processor and memory components that are programmed or configured to perform autonomous navigation of the cartesian arm system 100. Furthermore, a LiDAR (light detection and ranging) system 191 and a Global Navigation Satellite System (GNSS) 192 can also be mounted to the base frame 110 or the base plate 190 so that position data of the cartesian arm system 100 can be determined. The LiDAR system 191 and GNSS 192 can be used for obstacle avoidance and navigation when the cartesian arm system 100 is autonomously moved. Preferably, for example, the cartesian arm system 100 can be implemented with a remote control interface, and can communicate via one or more of Ethernet, USB, wireless communications, and GPS RTK (real time kinematics). The remote control interface and communications devices can be included in one or both of the base electronics 194 and imaging electronics 167 (described below). The cartesian arm system 100 can also include, or be communicatively connected with, a display device to display data and/or images obtained by the one or more devices 160 and to display information provided by the base electronics 194 (for example, location, speed, battery life, and the like of the cartesian arm system 100).

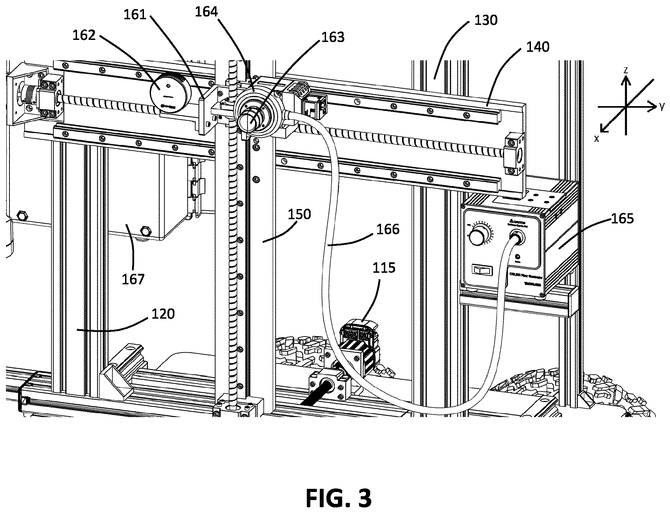

Fig. 3 is a close-up view of a portion of the cartesian arm system 100 that includes the one or more devices 160. As shown in Fig. 3, the one or more devices 160 can include a first camera 162, a second camera 163, and a camera light source 164 that are mounted to a bracket 161 attached to the vertical frame 150. Preferably, for example, the first camera 162 and the second camera 163 are mounted on different sides of the bracket 161 along the y-axis shown in Fig. 3 to balance a weight on the bracket 161 with respect to a mounting point on the vertical frame 150. Alternatively, the first camera 162 can be located at a fixed position, for example, on one of the side frames 120 and 130. As another alternative, the first camera 162 can be mounted to the horizontal frame 140 or to a second vertical frame that is separate from the vertical frame 150. That is, the first camera 162 can be mounted to a cartesian arm that is separate from the cartesian arm that moves the second camera 163.

The first camera 162 can be an RGB camera, a depth camera, a combined RGB camera and depth camera, a stereo camera, and the like. Preferably, for example, the first camera 162 is a camera that can provide both a relatively high resolution RGB image and relatively accurate depth information. The second camera 163 can be an HSI (hyperspectral imaging) camera, and the HSI camera can have a fixed focus length. The camera light source 164 can be a ring light that surrounds the second camera 163, and is preferably not mounted directly on the second camera 163 in order to prevent excessive warming of the second camera 163 from heat generated by the camera light source 164. Alternatively, the camera light source 164 can be mounted at a side of the second camera 163. The camera light source 164 can be connected to a light source supply 165. The camera light source 164 can include a halogen light source to provide a light spectrum for capturing HSI images, for example, in a range of about 400 nm to about 1000 nm. The light source supply 165 can be mounted to the side frame 130. The light source supply 165 can be connected to the camera light source 164 by a cable 166, and the cable 166 can include a fiber-optic cable. Preferably, for example, the cable 166 has a length of about three feet to provide sufficient length for movement of the one or more devices 160 while also significantly reducing or preventing a loss in the spectrum of the light output by the camera light source 164.

Preferably, for example, the cable 166 is a fiber-optic cable and has a length of about three feet or less to significantly reduce or prevent a loss in the spectrum of light output by the camera light source 164 while providing sufficient slack in the cable 166 to allow the one or more devices 160 full range of movement along each of the base frame 110, the horizontal frame 140, and the vertical frame 150. Preferably, for example, the cable 166 is provided to not be excessively bent or twisted, which may lead to a loss in the spectrum of light output by the camera light source 164.

The cartesian arm system 100 includes imaging electronics 167 that are mounted on side frame 120. The imaging electronics 167 can supply power to and control each of the base frame motor 115, the horizontal frame motor 145, and the vertical frame motor 155. That is, the imaging electronics 167 can include a power source to supply power to each of the base frame motor 115, the horizontal frame motor 145, and the vertical frame motor 155. In addition, the imaging electronics 167 can include processor and memory components that are programmed or configured to control each of the base frame motor 115, the horizontal frame motor 145, and the vertical frame motor 155. The processor and memory components of the imaging electronics 167 can also be configured or programmed to control the one or more devices 160, including the first camera 162, the second camera 163, the camera light source 164, and any light sources mounted on one or both of the side frames 120 and 130. In addition, the processor and memory components of the imaging electronics 167 can be configured or programmed to process image data obtained by the first camera 162 and the second camera 163.

As described above, the imaging electronics 167 and the base electronics 194 can include processors and memory components. The processors may be hardware processors, multipurpose processors, microprocessors, special purpose processors, digital signal processors (DPSs), and/or other types of processing components configured or programmed to process data. The memory components may include one or more of volatile, non-volatile, and/or replaceable data store components. For example, the memory components may include magnetic, optical, and/or flash storage components that may be integrated in whole or in part with the processors. The memory components may store instructions and/or instruction sets or programs that are able to be read and/or executed by the processors.

Preferably, for example, the imaging electronics 167 are mounted on the side arm 120 and the light source supply 165 is mounted on the side arm 130 to balance the overall weight of the cartesian arm system 100 along the y-axis shown in Fig. 1. That is, the imaging electronics 167 and the light source supply 165 are located to set a center of balance of the cartesian arm system 100 at a center portion of the base plate 190.

According to another preferred embodiment of the present invention, the imaging electronics 167 can be partially or completely implemented by the base electronics 194. For example, each of the base frame motor 115, the horizontal frame motor 145, and the vertical frame motor 155 can receive power from and/or be controlled by the base electronics 194 instead of the imaging electronics 167.

According to further preferred embodiments of the present invention, the imaging electronics 167 and the light source supply 165 can be connected to a power supply or power supplies that are separate from the base electronics 194. For example, a power supply can be included in one or both of the imaging electronics 167 and the light source supply 165. In addition, the base frame 110 may be detachably attached to the base plate 190, such that the base frame 110, the side frames 120 and 130, the horizontal frame 140, the vertical frame 150, and the components mounted thereto can be mounted on another vehicle or the like.

The base frame motor 115, the horizontal frame motor 145, and the vertical frame motor 155 are able to move the one or more devices 160 in three separate directions or along three separate axes. However, according to another preferred embodiment of the present invention, only a portion of the one or more devices 160 can be moved by the base frame motor 115, the horizontal frame motor 145, and the vertical frame motor 155, for example, only a second camera 163 or only the second camera 163 and the camera light source 164. Furthermore, the cartesian arm system 100 can be configured to linearly move the second camera 163 along only a single axis while the second camera 163 captures an image. For example, the horizontal frame motor 145 can be configured to linearly move the second camera 163 across a grape bunch while the second camera 163 captures an HSI image of the grape bunch.

A light source can be mounted on one or both of the side frames 120 and 130. For example, a light source 125 can be mounted to an upper portion of the side frame 120, and a light source 135 can be mounted to an upper portion of the side frame 130. The light sources 125 and 135 can include an LED light source that faces a same direction as the one or more devices 160, for example, along the x-axis shown in Fig. 1. The light sources 125 and 135 can provide illumination of an object or objects to be imaged by the first camera 162. For example, the light sources 125 and 135 can operate as a flash during daytime operation to compensate for ambient light when capturing images with the first camera 162. During nighttime operation, the light sources 125 and 135 can operate as either a flash for the first camera, or the light sources 125 and 135 can provide constant illumination for the first camera.

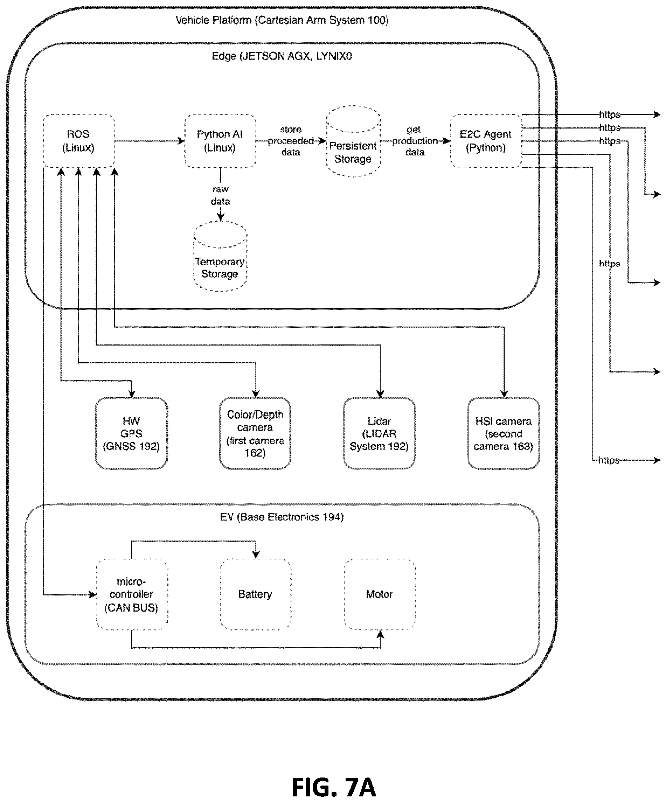

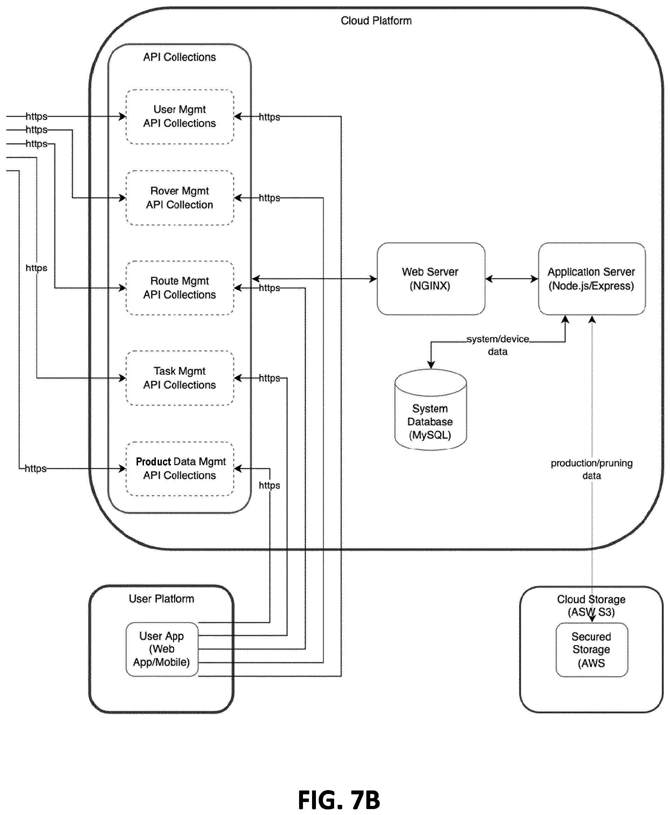

The imaging electronics 167 and the base electronics 194 of the cartesian arm system 100 can each be partially or completely implemented by edge computing to provide a vehicle platform, for example, by an NVIDIA^{®} JETSON^{™} AGX computer. In a preferred embodiment of the present invention, the edge computing provides all of the computation and communication needs of the cartesian arm system. Figs. 7A and 7B show an example of a block diagram of a cloud system that includes the vehicle platform and interactions with a cloud platform and a user platform. As shown in Figs. 7A and 7B, the edge computing of the vehicle platform includes a cloud agent, which is a service-based component that facilitates communication between the vehicle platform and the cloud platform. For example, the cloud agent can receive command and instruction data from the cloud platform (e.g., a web application on the cloud platform), and then transfer the command and instruction data to corresponding components of the vehicle platform. As another example, the cloud agent can transmit operation data and production data to the cloud platform. Preferably, the cloud platform can include software components and data storage to maintain overall operation of the cloud system. The cloud platform preferably provides enterprise-level services with on-demand capacity, fault tolerance, and high availability (for example, AMAZON WEB SERVICES^{™}). The cloud platform includes one or more application programming interfaces (APIs) to communicate with the vehicle platform and with the user platform. Preferably, the APIs are protected with a high level of security and a capacity of each of the APIs can be automatically adjusted to meet computational loads. The user platform provides a dashboard to control the cloud system and to receive data obtained by the vehicle platform and the cloud platform. The dashboard can be implemented by a web-based (e.g., internet browser) application, a mobile application, a desktop application, and the like.

As an example, the edge computing of the vehicle platform shown in Fig. 7A can obtain data from a HW (hardware) GPS (Global Positioning System) (for example, GNSS 192) and LiDAR data (for example, from LiDAR system 191). In addition, the vehicle platform can obtain data from a color/depth camera (for example, first camera 162) and data from an HSI camera (for example, second camera 163). The edge computing of the vehicle platform can include a temporary storage, for example, to store raw data obtained by the HSI camera. The edge computing of the vehicle platform can also include a persistent storage, for example, to store processed data. As a specific example, raw HSI data stored in the temporary storage can be processed by an artificial intelligence (AI) model, the processed HSI data can then be stored in the persistent storage, and the cloud agent can retrieve and transmit the processed HSI data from the persistent storage.

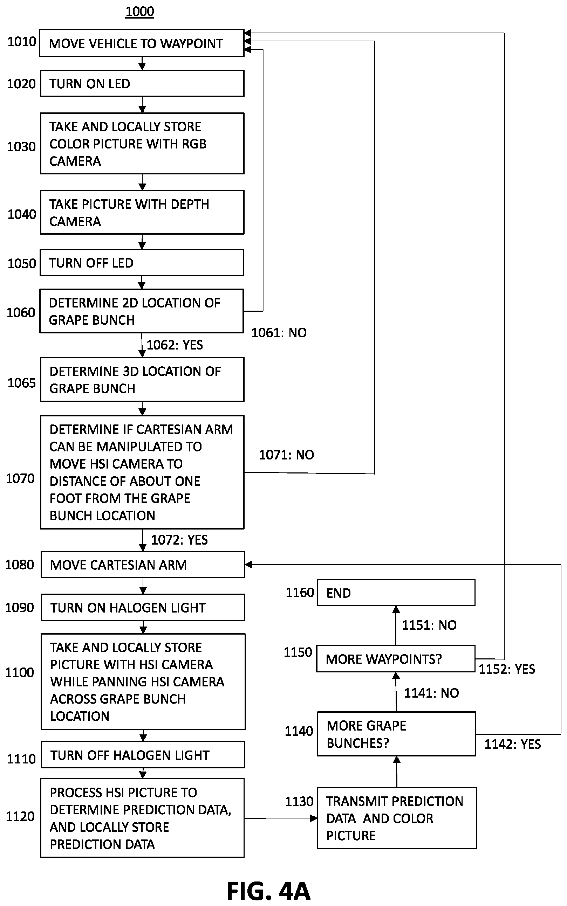

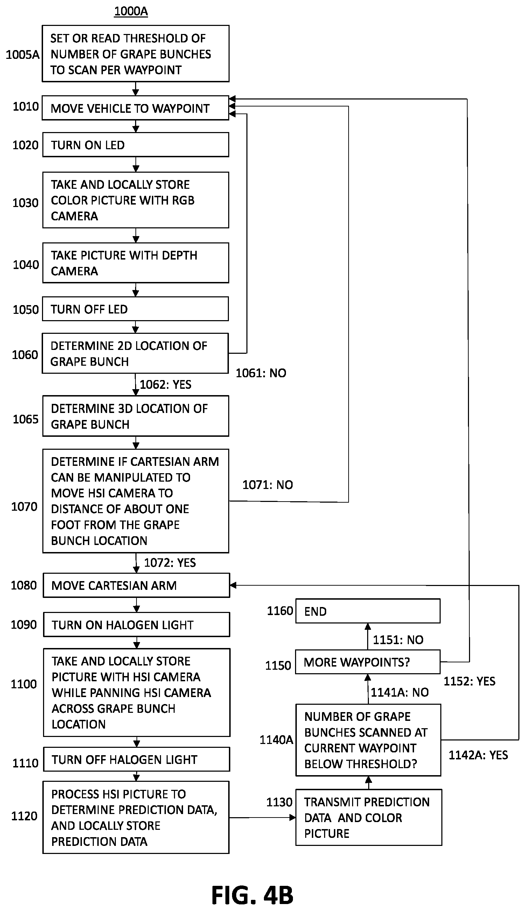

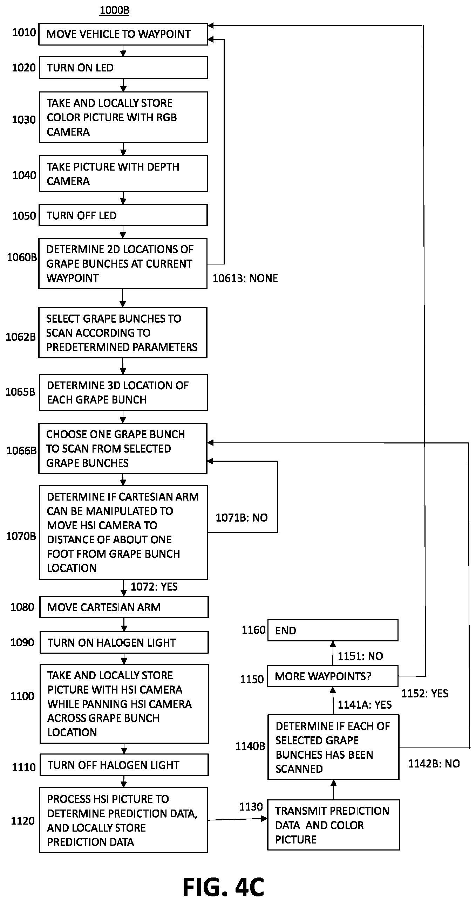

Fig. 4A is a flowchart showing a process 1000 performed according to a preferred embodiment of the present invention. Figs. 4B and 4C, described further below, are flowcharts showing modified processes 1000A and 1000B according to additional preferred embodiments of the present invention.

As shown in Fig. 4A, a vehicle (for example, the cartesian arm system 100) moves to a waypoint in operation 1010. The waypoint may be set or programmed in advanced into an on-board memory of the vehicle, retrieved from a remote storage, determined according to a distance or time from a previous waypoint, or the like.

Upon reaching the waypoint, the vehicle is stopped, and the vehicle turns ON an LED in operation 1020. With the LED turned ON, the vehicle takes a color image (two dimensional color image) with an RGB camera in operation 1030. The vehicle can store the color image taken by the RGB camera in a local storage of the vehicle.

After taking the color picture with the RGB camera, the vehicle takes a depth picture with a depth camera in operation 1040. The depth camera can be implemented by a LiDAR (light detection and ranging) camera or a stereo camera. The RGB camera and the depth camera can be implemented by a single camera (for example, first camera 162). In a preferred embodiment of the present invention in which the RGB camera and the depth camera are implemented by a single camera, step 1030 of taking the color picture and step 1040 of taking the depth picture can be performed simultaneously.

After taking the depth picture with the depth camera, the vehicle turns OFF the LED in operation 1050. The vehicle performs processing in operation 1060 to determine a location of one or more grape bunches within the two-dimensional color image taken in operation 1030. In other words, the color image is used to determine a location of one or more grape bunches in a two-dimensional plane. If a grape bunch location is not determined (1061: NO), the process 1000 returns to operation 1010 and the vehicle moves to a next waypoint. If a two-dimensional grape bunch location is determined (1062: YES), the vehicle then determines a three-dimensional location of the grape bunch in operation 1065 by adding depth information from the depth picture taken in operation 1040 to the two-dimensional color image taken in operation 1030. An artificial intelligence (AI) model can be used in operations 1060 and 1065 to identify the location of the grape bunch.

The vehicle then determines in operation 1070 if a cartesian arm of the vehicle can be manipulated to move an HSI camera (for example, second camera 163) to a predetermined distance (e.g., about one foot) from the determined three-dimensional location of the grape bunch. In a preferred embodiment of the present invention, the determined three-dimensional location of the grape bunch can be calculated based on an average depth of a plurality of grapes in the grape bunch. The predetermined distance can be based upon a focus length of the HSI camera (for example, about one foot), which is fixed in a preferred embodiment of the present invention. The cartesian arm can be manipulated by, for example, the base frame motor 115, the horizontal frame motor 145, and the vertical frame motor 155. If the cartesian arm of the vehicle cannot be manipulated to move the HSI camera to the predetermined distance from the determined location of the grape bunch (1071: NO), the process 1000 returns to operation 1010 and the vehicle moves to a next waypoint.

If the cartesian arm of the vehicle can be manipulated to move the HSI camera to the predetermined distance from the determined location of the grape bunch (1072: YES), the vehicle moves the cartesian arm in operation 1080 to the predetermined distance from the determined location of the grape bunch and turns ON a halogen light (for example, camera light source 164) in operation 1090. The halogen light emits a predetermined spectrum of light. After the halogen light has been turned ON, the vehicle takes an HSI picture with the HSI camera while manipulating the cartesian arm to pan the HSI camera across the determined location of the grape bunch in operation 1100. For example, the horizontal frame motor 145 is used to pan the HSI camera in the second direction (along the y-axis) across the grape bunch while the HSI image is being taken. In a preferred embodiment of the present invention, prior to taking the HSI image, the HSI camera may be heated to a predetermined temperature, or for a predetermined prior of time, which can improve stable data acquisition. The vehicle can store the HSI picture taken by the HSI camera in the local storage of the vehicle. Since the halogen light emits a predetermined spectrum of light to illuminate the grape bunch when the HSI camera obtains the HSI data, the HSI data is able to be processed with respect to this predetermined spectrum of light. After the HSI camera images the grape bunch, the vehicle turns OFF the halogen light in operation 1110.

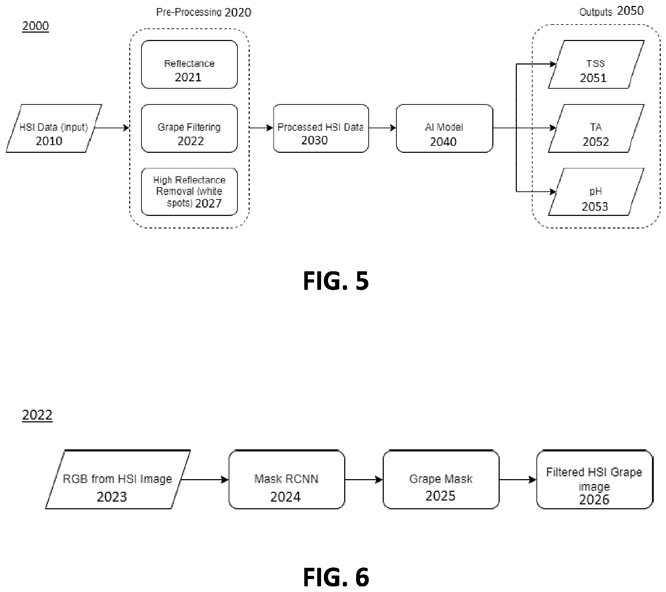

In operation 1120, the vehicle processes an HSI picture taken by the HSI camera to determine prediction data of the grape bunch. The vehicle can store the HSI picture taken by the HSI camera and the prediction data in local storage(s) of the vehicle. For example, the HSI picture taken by the HSI camera can be initially stored in a temporary storage (e.g., a volatile memory), and data obtained by processing the HSI picture can subsequently be stored in a persistent storage (e.g., a non-volatile memory). The processing performed in operation 1120 is described in further detail below with respect to Figs. 5 and 6.

In operation 1130, the vehicle transmits the prediction data and the color picture taken by the RGB camera, for example, to a remote storage. In addition, the color picture is provided with the prediction data so that a user is able to visually verify the location and suitability of grape bunches identified by the prediction data. However, since HSI pictures and the corresponding prediction data may have relatively large file sizes, only a portion of the prediction data or only selected HSI pictures may be transmitted, for example, to the remote storage. In addition, the vehicle may transmit only a portion of the color picture taken by the RGB camera, for example, to the remote storage. Similarly, the vehicle may transmit only selected color pictures taken by the RGB camera, for example, to the remote storage. According to another preferred embodiment of the present invention, the vehicle can transmit some or all color pictures taken by the RGB camera separately from transmitting the prediction data. That is, the vehicle may transmit some or all color pictures taken by the RGB camera at any point between operations 1040 and 1130. In addition to the above features, the prediction data can be applied to some or all of the color pictures so that a bounding box or the like is included with the color picture(s) to indicate a predicted location of grape bunch(es).

In operation 1140, the vehicle determines if additional grape bunches are to be imaged by the HSI camera at the current waypoint. If no additional grape bunches are to be imaged at the current waypoint (1141: NO), the process 1000 proceeds to operation 1150. However, if additional grape bunches are to be imaged by the HSI camera at the current waypoint (1142: YES), the process 1000 returns to operation 1080. As an example, the process 1000 may perform a sampling of only a portion of grape bunches in a vine or vineyard (e.g., three grape bunches per grape vine).

In operation 1150, the vehicle determines if additional waypoints are to be traveled to by the vehicle. If no further waypoints are stored by the vehicle, able to be retrieved by the vehicle, or the like (1151: NO), the process 1000 ends at operation 1160. However, if further waypoints are stored by the vehicle, able to be retrieved by the vehicle, or the like (1152: YES), the process 1000 returns to operation 1010 and the vehicle moves to a next waypoint. As examples, the Al model can be used to determine a next waypoint, or waypoints can be preprogrammed according to GPS data.

Fig. 4B shows a modified process 1000A in which only a predetermined portion of grape bunches is sampled. Detailed description of operations shown in Fig. 4B that are the same as those shown in Fig. 4A are omitted for conciseness.

As shown in Fig. 4B, the modified process 1000A includes an operation 1005A of setting or reading a predetermined threshold of the number of grape bunches to be scanned per waypoint. For example, the predetermined threshold value can be set in advance by a user, and the vehicle can read the predetermined threshold value when executing the modified process 1000A. Subsequently, in operation 1140A, the vehicle determines if the number of grape bunches scanned at the current waypoint has reached the predetermined threshold. If the number of grape bunches scanned at the current waypoint is below the predetermined threshold (1142A: YES), the process 1000A returns to operation 1080. However, if the number of grape bunches scanned at the current waypoint has reached (is not below) the predetermined threshold (1141A: NO), the process 1000A proceeds to operation 1050.

Fig. 4C shows another modified process 1000B in which grape bunches can be selected for scanning according to the color picture with the RGB camera. Detailed description of operations shown in Fig. 4C that are the same as those shown in Fig. 4A will be omitted for conciseness.

As shown in Fig. 4C, the modified process 1000B includes an operation 1060B of determining two-dimensional locations of grape bunches at a current waypoint. However, if no grape bunch location is determined (1061: NO), the process 1000B returns to operation 1010 and the vehicle moves to a next waypoint. After determining the two-dimensional locations of grape bunches at the current waypoint in operation 1060B, the modified process 1000B then proceeds to operation 1062B to select grape bunches to be scanned from among the grape bunches corresponding to the determined two-dimensional locations. The grape bunches to be scanned can be selected according to various predetermined parameters, including, but not limited to, grape bunches that are least obstructed by obstacles (e.g., sticks, leaves, and the like), grape bunches that have a largest surface area facing the HSI camera, and/or grape bunches according to their color in the color picture (e.g., grape bunches that appear most ripe in the color picture).

Once grape bunches to be scanned have been selected in operation 1062B, a three-dimensional location of each grape bunch is determined in operation 1065B, similar to operation 1065 described above with respect to Fig. 4A. Subsequently, in operation 1066B, one grape bunch from the selected grape bunches is chosen for scanning by the HSI camera. In operation 1070B, the vehicle determines if the cartesian arm of the vehicle can be manipulated to move the HSI camera to a predetermined distance (e.g., about one foot) from the determined three-dimensional location of the chosen grape bunch. If the cartesian arm of the vehicle cannot be manipulated to move the HSI camera to the predetermined distance from the determined location of the grape bunch (1071B: NO), the process 1000B returns to 1066B and another grape bunch from the selected grape bunches is chosen for scanning by the HSI camera. If the cartesian arm of the vehicle cannot be manipulated to move the HSI camera to the predetermined distance from the determined location of any of the selected grape bunches, the modified process 1000B may return to operation 1010.

The modified process 1000B scans and transmits data regarding each of the determined grape bunch in operations 1080 to 1130, similar to the operations described above with respect to Fig. 4A. However, in operation 1140B, the modified process 1140B determines if each of the selected grape bunches has been scanned by the HSI camera. If each of the selected grape bunches has not been scanned (1142B: NO), the modified process 1140B returns to operation 1066B and another grape bunch from the selected grape bunches is chosen for scanning by the HSI camera. However, if each of the selected grape bunches has been scanned by the HSI camera (1141A: YES), the modified process 1000B proceeds to operation 1150, which has been described above with respect to Fig. 4A.

Fig. 5 is a flowchart showing an image processing process 2000 performed according to a preferred embodiment of the present invention.

In the image processing process 2000, HSI data is input in operation 2010. Operation 2010 in Fig. 5 can include data from operation 1100 described above with respect to Figs. 4A-4C. The data captured by the HSI camera is raw image data that includes all reflections and a full wavelength spectrum, and this raw image data is captured for each grape bunch, for example. The raw image data includes background data, for example, leaves or vines, and this background data has a spectra that is different from the spectra of the grapes of the grape bunch. In operation 2020, pre-processing is performed on the raw image data.

Prior to performing further processing, the raw image data is first converted to reflectance data in operation 2021. The reflectance data provides a meaningful measurement of the image data. Operation 2021 includes illumination compensation, which is performed on the reflectance data according to a white reference and a dark reference. The white reference can be a predetermined reference that is obtained by taking a picture with the HSI camera of a white object with known reflectance values before performing the processes shown in Figs. 4A-4C. Alternatively, the white reference can be determined for each grape bunch by including a white object with known reflectance values in each image generated by the HSI camera, for example, a rectangular-shaped white object included in a bottom portion of some or all images generated by the HSI camera. An average spectrum of the white reference can be used. Variations in the dark reference generally only introduce a negligible amount of noise, and thus a constant dark reference value can be applied. The corrected data generated by the reflectance processing in operation 2021 can be used to further train an Al model, for example.

The HSI data, which is captured per grape bunch as described above with respect to Figs. 4A-4C, includes background data. Accordingly, in operation 2022, grape filtering is performed to eliminate the background data and preserve only the spectra data of the grape bunch. Fig. 6 shows sub-operations that are performed in the grape filtering operation 2022. First, in operation 2023, an RGB image is derived from the HSI data and transmitted to an AI based network. As an example, the AI based network that performs the grape filtering can include an Instance Segmentation network, which is a robust Deep Learning model that is trained on grape images. In a preferred embodiment of the present invention, an instance segmentation model of the Instance Segmentation network can include a Mask RCNN (Region Based Convolutional Neural Network), shown in operation 2024. The AI based network then outputs, in operation 2025, a mask of the grape bunch alone (not including the background) for the RGB image derived from the HSI data. This mask can be applied to the HSI image corresponding to the HSI data to filter out the background from the grape bunch, as shown in operation 2026. For example, the mask can be applied to the HSI image corresponding to the HSI data to remove any data that does not correspond to the detected grape bunch. As a specific example, the mask can be applied to generate a grape berry mask that filters out non-berry regions, such as leaves, stems, and the like.

Due to the spheroidal shape and generally glossy texture which provide grapes with a highly reflective surface, an HSI image of a grape bunch may include high reflectance regions that appear as white spots in the HSI image. These high reflectance regions have relatively high spectra values and can appear as white spots in the HSI image. Accordingly, in operation 2027, high reflectance spectra removal (white spot removal) is performed on the HSI data corresponding to the HSI data. To detect and then remove white spots from the HSI image, a robust algorithm known as adaptive thresholding is applied in operation 2027. The adaptive thresholding algorithm calculates the threshold values for smaller regions with respect to the surrounding regions of these smaller regions, and then the adaptive thresholding algorithm applies the calculated threshold values to detect and remove high reflectance values. Accordingly, spectra that lie outside of a range for grape detection are able to be removed from the HSI image corresponding to the HSI data.

As shown in operation 2030, the above processes provide processed HSI data. The processed HSI data can then be applied to an Al model to predict the quality attributes of grapes, in operation 2040. To predict grape quality attributes, a partial least squares (PLS) regressor model can be implemented. The PLS regressor model is a regression technique that reduces predictors to a smaller set of uncorrelated components and performs a least squares regression on these components, instead of on the original data. The PLS regressor model can perform simultaneous decomposition of predictor variables and target variables such that the covariance between the two is maximum. The Al model then provides one or more outputs as shown in operation 2050. The PLS regressor model is able to predict one or more attributes of grapes, including Total Soluble Solids (TSS) 2051, Titratable Acidity (TA) 2052, and pH attributes 2053. The outputs provided in operation 2050 are able to provide predictions regarding grape quality and/or ripeness. In operation 1130 of Figs. 4A-4C, these predictions (prediction data) can be transmitted with the color picture.

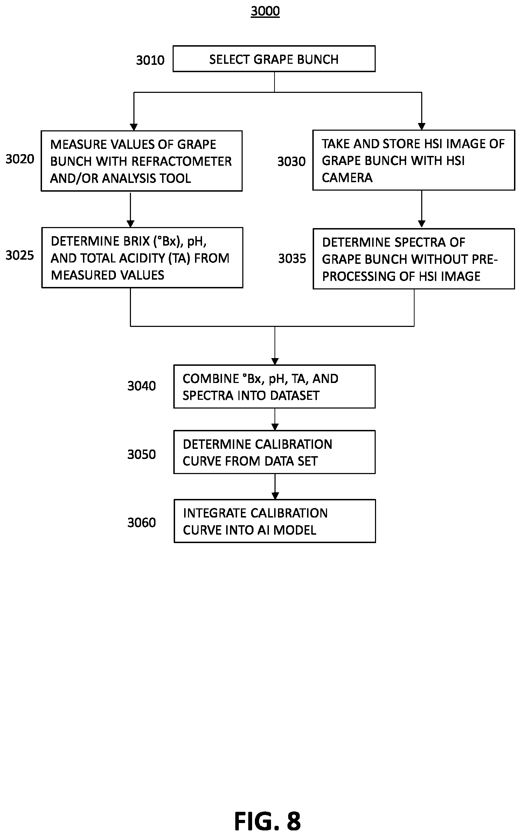

Fig. 8 is a flowchart showing a process 3000 of constructing a calibration curve to train an Al model according to a preferred embodiment of the present invention. As described below, the process 3000 can train an Al model (for example, the PLS regressor model) by using only HSI data and empirical measurements.

As shown in Fig. 8, a grape bunch is selected in operation 3010. In operation 3020, values of the grape bunch are measured. For example, a refractometer and other analysis tools can be used to measure values of the grape bunch. As specific examples, the refractometer can be a digital Brix refractometer that is able to measure a dissolved sugar content of a liquid sample, and other analysis tools can include a single digital instrument or meter that is able to measure one or more of sulfite (SO₂), pH, and TA levels. The refractometer and other analysis tools can respectively include receptacles that receive a sample to be measured and/or electrodes that are insertable into a sample to be measured. The sample can be titrated prior to measurement, depending upon the specific refractometer and other analysis tools used. The TA level can be measured in units of g/L Tartaric Acid.

According to the values measured in operation 3020, the overall Brix (°Bx), pH, and TA of the grape bunch can be determined, as shown in operation 3025.

Furthermore, an HSI image of the grape bunch is captured with an HSI camera in operation 3030. In operation 3035, spectra of the grape bunch is determined from the HSI image. Preferably, for example, the spectra of the grape bunch is determined without pre-processing of the HSI image, in contrast to the pre-processing performed in operation 2020 of Fig. 5. However, the process of determining the spectra of the grape bunch in operation 3035 may include other processing, such as smoothing or determining the second derivative of the data.

In operation 3040, the °Bx, pH, and TA determined in operation 3025 are combined with the spectra determined in operation 3040 to provide a data set. According to the data set provide by operation 3040, a calibration curve can be determined in operation 3050. The calibration curve can then be integrated into an Al model (for example, the PLS regressor model), as shown in operation 3060, to train the Al model.

The PLS regressor model can be adapted to vary based upon different variables and conditions. For example, the PLS regressor model can vary according to the region and climate where the grapes are grown, the time of day and temperature when the grapes are imaged, the specific type of grapes (e.g., color, size, and/or variety of grape), and the like. Furthermore, vision-based deep-learning algorithms can be applied to train and refine the Al model. For example, a Mask RCNN can be used to pre-process HSI data before using the HSI data to train the PLS regressor model. Al processing of tested data can be used to determine the effectiveness of the Al model in determining prediction data from HSI images. For example, as described above, a Mask RCNN can be used to pre-process HSI data before using the HSI data to test a trained PLS regressor model.

The processes 1000 and 2000 described above are able to provide data identifying a wavelength that provides the most significant data regarding the imaged grape bunches.

A cartesian arm according to a preferred embodiment of the present invention is able to move a device, for example, a camera, along three axes. The three axes may correspond to an x-axis, a y-axis, and a z-axis. However, the present invention is not limited to three axes, and the cartesian arm can be implemented to move a device along any number of axes. In addition, the cartesian arm can be implemented to collectively move a plurality of devices, for example, a light source and a camera. As specific examples, the cartesian arm can move an HSI (hyperspectral imaging) camera, an RGB camera, a depth camera, a halogen light, and/or an LED light. The depth camera can be implemented by a LiDAR (light detection and ranging) camera or a stereo camera. As an example, the RGB camera and the depth camera can be both implemented by an INTEL^{®} REALSENSE^{™} LiDAR Camera L515. As an example, the HSI camera can be a Pika L made by RESONON. In a preferred embodiment, the HSI camera can include a lens implemented by a SCHNEIDER-KREUZNACH XENOPLAN 1.4/17-0903. As further examples, the halogen light can be implemented by a THORLABS OSL2IR or a THORLABS FRI61F50. In addition, the refractometer to measure the Brix (°Bx) can be a MILWAUKEE MA871 DIGITAL BRIX REFRACTOMETER, and other analysis tools can include a VINMETRICA SC-300 SO2 & pH/TA WINE ANALYZER.

The processes and operations described herein are preferably performed at night so that a varying spectrum of light from the sun, which can vary according to weather conditions and the like, does not influence the predetermined spectrum of light emitted by the halogen light.

The processes and operations described herein are described with respect to an autonomous vehicle that is able to automatically move between waypoints. However, a vehicle and/or cameras that are manually operated by a user can be implemented within the scope of the preferred embodiments of the present invention.

The processes and operations described herein are described with respect to predicting quality parameters of grapes. However, the processes and operations described herein can be applied to any predetermined objects, including other agricultural products.

## Claims

1. A method comprising:
acquiring (1030) first image data,
detecting an object based on the first image data, the object being an agricultural item;
determining (1060) a location of the object based on the first image data;
moving a hyperspectral camera after determining the location of the object and before acquiring (1100) second image data,
acquiring (1100) the second image data based on the location of the object; the second image data being acquired by moving the hyperspectral camera across the object to a predetermined distance based upon a focus length of the hyperspectral camera, and
analyzing (1120) the second image data to determine a characteristic of the object; wherein
the second image data is acquired by the hyperspectral camera and the second image data includes hyperspectral image data.

2. The method according to claim 1, wherein the first image data includes color data and depth data.

3. The method according to claim 2, wherein
the object is detected based on the color data alone; and
the location of the object is determined based on a combination of the color data and the depth data.

4. The method according to any of claims 1 to 3, further comprising turning on (1020) a light source to illuminate the object while acquiring the first image data.

5. The method according to claim 4, wherein the light source is an LED light source.

6. The method according to claim 4 or 5, wherein the light source is turned off prior to acquiring the second image data.

7. The method according to any of claims 1 to 6, wherein the hyperspectral camera is moved based on the determined location of the object.

8. The method according to any of claims 1 to 7, wherein the hyperspectral camera is moved by a cartesian arm.

9. The method according to any of claims 1 to 8, wherein the hyperspectral camera is only moved along a single linear axis.

10. The method according to any of claims 1 to 9, further comprising:
turning on (1090) a light source to illuminate the object while acquiring the second image data, wherein
the light source emits a predetermined spectrum of light.

11. The method according to claim 10, wherein the predetermined spectrum of light is a range of about 400 nm to about 1000 nm.

12. The method according to any of claims 1 to 11, wherein:
a halogen light source surrounds the hyperspectral camera.

13. The method according to any of claims 1 to 12, wherein:
a halogen light source is located at only one side of the hyperspectral camera.

14. The method according to any of claims 1 to 13, wherein:
the hyperspectral camera has a fixed focus length.

15. The method according to any of claims 1 to 14, wherein the location of the object is determined in three dimensions.

16. The method according to any one of claims 1 to 15, the method further comprising:
setting or reading (1005A) a threshold value of a predetermined number of objects to be imaged;
detecting objects based on the first image data until the threshold value of the predetermined number of objects is reached, the objects being agricultural items;
determining a location of each of the objects based on the first image data;
wherein acquiring (1100) the second image data is based on the locations of each of the objects, the second image data being acquired by moving the hyperspectral camera across each of the objects to a predetermined distance based upon a focus length of the hyperspectral camera.

17. The method according to any one of claims 1 to 15, the method further comprising:
detecting objects based on the first image data, the objects being agricultural items;
selecting (1062B) one or more of the objects according to at least one predetermined parameter;
determining a location of each of the selected one or more objects based on the first image data;
wherein
acquiring (1100) second image data is based on the locations of each of the selected one or more objects, and
the at least one predetermined parameter includes one or more of a visible proportion of each of the objects, a surface area of each of the objects, and a color of each of the objects, and
the second image data is acquired by moving the hyperspectral camera across each of the objects to a predetermined distance based upon a focus length of the hyperspectral camera.

## Patentansprüche

1. Verfahren, umfassend:
Erfassen (1030) von ersten Bilddaten,
Erkennen eines Objekts basierend auf den ersten Bilddaten, wobei das Objekt ein landwirtschaftlicher Gegenstand ist;
Bestimmen (1060) einer Position des Objekts basierend auf den ersten Bilddaten;
Bewegen einer hyperspektralen Kamera nach Bestimmen der Position des Objekts und vor Erfassen (1100) von zweiten Bilddaten,
Erfassen (1100) der zweiten Bilddaten basierend auf der Position des Objekts; wobei die zweiten Bilddaten durch Bewegen der hyperspektralen Kamera über das Objekt hinweg in einen vorbestimmten Abstand entsprechend einer Brennweite der hyperspektralen Kamera erfasst werden, und
Analysieren (1120) der zweiten Bilddaten, um eine Eigenschaft des Objekts zu bestimmen; wobei
die zweiten Bilddaten durch die hyperspektrale Kamera erfasst werden und die zweiten Bilddaten hyperspektrale Bilddaten beinhalten.

2. Verfahren nach Anspruch 1, wobei die ersten Bilddaten Farbdaten und Tiefendaten beinhalten.

3. Verfahren nach Anspruch 2, wobei
das Objekt nur basierend auf den Farbdaten erkannt wird; und
die Position des Objekts basierend auf einer Kombination der Farbdaten und der Tiefendaten bestimmt wird.

4. Verfahren nach einem der Ansprüche 1 bis 3, ferner umfassend ein Einschalten (1020) einer Lichtquelle zum Beleuchten des Objekts beim Erfassen der ersten Bilddaten.

5. Verfahren nach Anspruch 4, wobei die Lichtquelle eine LED-Lichtquelle ist.

6. Verfahren nach Anspruch 4 oder 5, wobei die Lichtquelle vor Erfassen der zweiten Bilddaten ausgeschaltet wird.

7. Verfahren nach einem der Ansprüche 1 bis 6, wobei die hyperspektrale Kamera basierend auf der bestimmten Position des Objekts bewegt wird.

8. Verfahren nach einem der Ansprüche 1 bis 7, wobei die hyperspektrale Kamera durch einen kartesischen Arm bewegt wird.

9. Verfahren nach einem der Ansprüche 1 bis 8, wobei die hyperspektrale Kamera nur entlang einer einzigen linearen Achse bewegt wird.

10. Verfahren nach einem der Ansprüche 1 bis 9, ferner umfassend:
Einschalten (1090) einer Lichtquelle zum Beleuchten des Objekts beim Erfassen der zweiten Bilddaten,
wobei die Lichtquelle ein vorbestimmtes Lichtspektrum emittiert.

11. Verfahren nach Anspruch 10, wobei das vorbestimmte Lichtspektrum ein Bereich von etwa 400 nm bis etwa 1000 nm ist.

12. Verfahren nach einem der Ansprüche 1 bis 11, wobei:
eine Halogenlichtquelle die hyperspektrale Kamera umgibt.

13. Verfahren nach einem der Ansprüche 1 bis 12, wobei:
Sich eine Halogenlichtquelle nur auf einer Seite der hyperspektralen Kamera befindet.

14. Verfahren nach einem der Ansprüche 1 bis 13, wobei:
die hyperspektrale Kamera eine feste Brennweite aufweist.

15. Verfahren nach einem der Ansprüche 1 bis 14, wobei die Position des Objekts in drei Dimensionen bestimmt wird.

16. Verfahren nach einem der Ansprüche 1 bis 15, das Verfahren ferner umfassend:
Festlegen oder Lesen (1005A) eines Schwellenwerts einer vorbestimmten Anzahl von bildzugebenden Objekten;
Erkennen von Objekten basierend auf den ersten Bilddaten, bis der Schwellenwert der vorbestimmten Anzahl von Objekten erreicht ist, wobei die Objekte landwirtschaftliche Gegenstände sind;
Bestimmen einer Position jedes der Objekte basierend auf den ersten Bilddaten;
wobei ein Erfassen (1100) der zweiten Bilddaten basierend auf den Positionen jedes der Objekte erfolgt, wobei die zweiten Bilddaten durch Bewegen der hyperspektralen Kamera über jedes der Objekte hinweg in einen vorbestimmten Abstand entsprechend einer Brennweite der hyperspektralen Kamera erfasst werden.

17. Verfahren nach einem der Ansprüche 1 bis 15, das Verfahren ferner umfassend:
Erkennen von Objekten basierend auf den ersten Bilddaten, wobei die Objekte landwirtschaftliche Gegenstände sind;
Auswählen (1062B) eines oder mehrerer der Objekte gemäß mindestens einem vorbestimmten Parameter;
Bestimmen einer Position jedes von dem ausgewählten einen oder mehreren Objekte basierend auf den ersten Bilddaten;
wobei
Ein Erfassen (1100) von zweiten Bilddaten auf den Positionen von dem ausgewählten einen oder mehreren Objekte erfolgt, und
der mindestens eine vorbestimmte Parameter eines oder mehrere von einem sichtbaren Anteil jedes der Objekte, einer Oberfläche jedes der Objekte und einer Farbe jedes der Objekte beinhaltet, und
die zweiten Bilddaten durch Bewegen der hyperspektralen Kamera über jedes der Objekte hinweg in einen vorbestimmten Abstand entsprechend einer Brennweite der hyperspektralen Kamera erfasst werden.

## Revendications

1. Procédé, comprenant :
l'acquisition (1030) de premières données d'image,
la détection d'un objet sur la base des premières données d'image, l'objet étant un article agricole ;
la détermination (1060) d'un emplacement de l'objet sur la base des premières données d'image ;
le déplacement d'une caméra hyperspectrale après la détermination de l'emplacement de l'objet et avant l'acquisition (1100) de deuxièmes données d'image,
l'acquisition (1100) des deuxièmes données d'image sur la base de l'emplacement de l'objet ; les deuxièmes données d'image étant acquises en déplaçant la caméra hyperspectrale au-dessus de l'objet jusqu'à une distance prédéterminée en fonction d'une longueur de mise au point de la caméra hyperspectrale, et
l'analyse (1120) des deuxièmes données d'image pour déterminer une caractéristique de l'objet ;
dans lequel
les deuxièmes données d'image sont acquises par la caméra hyperspectrale et les deuxièmes données d'image comprennent des données d'image hyperspectrale.

2. Procédé selon la revendication 1, dans lequel les premières données d'image comprennent des données de couleur et des données de profondeur.

3. Procédé selon la revendication 2, dans lequel
l'objet est détecté sur la base des seules données de couleur ; et
l'emplacement de l'objet est déterminé sur la base d'une combinaison des données de couleur et des données de profondeur.

4. Procédé selon l'une quelconque des revendications 1 à 3, comprenant en outre l'allumage (1020) d'une source lumineuse pour éclairer l'objet lors de l'acquisition des premières données d'image.

5. Procédé selon la revendication 4, dans lequel la source lumineuse est une source lumineuse à LED.

6. Procédé selon la revendication 4 ou 5, dans lequel la source lumineuse est éteinte avant l'acquisition des deuxièmes données d'image.

7. Procédé selon l'une quelconque des revendications 1 à 6, dans lequel la caméra hyperspectrale est déplacée sur la base de l'emplacement déterminé de l'objet.

8. Procédé selon l'une quelconque des revendications 1 à 7, dans lequel la caméra hyperspectrale est déplacée par un bras cartésien.

9. Procédé selon l'une quelconque des revendications 1 à 8, dans lequel la caméra hyperspectrale est déplacée uniquement le long d'un seul axe linéaire.

10. Procédé selon l'une quelconque des revendications 1 à 9, comprenant en outre :
l'allumage (1090) d'une source lumineuse pour éclairer l'objet lors de l'acquisition des deuxièmes données d'image, dans lequel
la source lumineuse émet un spectre de lumière prédéterminé.

11. Procédé selon la revendication 10, dans lequel le spectre de lumière prédéterminé est une plage d'environ 400 nm à environ 1000 nm.

12. Procédé selon l'une quelconque des revendications 1 à 11, dans lequel :
une source lumineuse halogène entoure la caméra hyperspectrale.

13. Procédé selon l'une quelconque des revendications 1 à 12, dans lequel :
une source lumineuse halogène est située uniquement d'un côté de la caméra hyperspectrale.

14. Procédé selon l'une quelconque des revendications 1 à 13, dans lequel :
la caméra hyperspectrale présente une longueur de mise au point fixe.

15. Procédé selon l'une quelconque des revendications 1 à 14, dans lequel l'emplacement de l'objet est déterminé en trois dimensions.

16. Procédé selon l'une quelconque des revendications 1 à 15, le procédé comprenant en outre :
la définition ou la lecture (1005A) d'une valeur seuil d'un nombre prédéterminé d'objets à imager;
la détection d'objets sur la base des premières données d'image jusqu'à ce que la valeur seuil du nombre prédéterminé d'objets soit atteinte, les objets étant des articles agricoles ;
la détermination d'un emplacement de chacun des objets sur la base des premières données d'image ;
dans lequel l'acquisition (1100) des deuxièmes données d'image est basée sur les emplacements de chacun des objets, les deuxièmes données d'image étant acquises en déplaçant la caméra hyperspectrale au-dessus de chacun des objets jusqu'à une distance prédéterminée en fonction d'une longueur de mise au point de la caméra hyperspectrale.

17. Procédé selon l'une quelconque des revendications 1 à 15, le procédé comprenant en outre :
la détection d'objets sur la base des premières données d'image, les objets étant des articles agricoles;
la sélection (1062B) d'un ou plusieurs des objets selon au moins un paramètre prédéterminé ;
la détermination d'un emplacement de chacun du ou des objets sélectionnés sur la base des premières données d'image ;
dans lequel
l'acquisition (1100) des deuxièmes données d'image est basée sur les emplacements de chacun du ou des objets sélectionnés, et
l'au moins un paramètre prédéterminé comprend un ou plusieurs éléments parmi une proportion visible de chacun des objets, une superficie de chacun des objets, et une couleur de chacun des objets, et
les deuxièmes données d'image sont acquises en déplaçant la caméra hyperspectrale au-dessus de chacun des objets jusqu'à une distance prédéterminée en fonction d'une longueur de mise au point de la caméra hyperspectrale.
